# DEMANDE DE BREVET EUROPEEN

(11) **EP 0 624 656 A1**
(43) Date de publication de la demande: **17.11.1994**
(21) Numéro de dépôt: 94400958.8
(22) Date de dépôt: 03.05.1994
(51) Int. Cl.: C22B 7/00

(54) **Procédé et installation pour le traitement par thermolyse sous vide de produits solides, avec séparation et récupération en continu d'une fraction liquide de ces produits**

(30) Priorité: 11.05.1993 FR 9305645
(71) Demandeur: SOCIETE FRANCAISE DE THERMOLYSE, F-13082 Aix-En-Provence Cedex 02 (FR)
(72) Inventeur: Chaussonnet, Pierre, F-13100 Aix-en-Provence (FR)
(74) Mandataire: Santarelli, Marc

(57) **Abrégé**

Un procédé de traitement de produits solides contenant du métal à bas point de fusion, selon lequel on chauffe ces produits dans une première zone, on les thermo- lyse (2) dans une deuxième zone sous une pression subatmosphérique tandis qu'on recueille à l'aide d'un siphon (7), communiquant avec l'extérieur, du métal liquide s'écoulant des produits, puis on réduit ces produits dans une troisième zone, ces zones étant isolées les unes des autres et vis à vis de l'extérieur par des portes formant sas.

## Description

La présente invention concerne un procédé et une installation pour le traitement par thermolyse sous vide de produits solides en milieu confiné avec séparation et extraction en continu d'une fraction liquide issue de la transformation. Lorsque cette transformation nécessite l'adjonction de produits complémentaires, l'invention propose en outre, selon un aspect original en soi, un système d'injection continue de produits secondaires qui permet de respecter d'éventuelles conditions d'ambiance nécessaires pour que la transformation soit complète.

On connaît déjà des procédés pour traiter des solides pour récupérer sous forme liquide une fraction utile de ces solides, tels que ceux que l'on peut trouver dans les installations de récupération de métaux à bas point de fusion (typiquement inférieur à 500°C), plomb par exemple.

Traditionnellement, ces produits sont stockés puis traités par des procédés mécaniques pour séparer et trier les matières valorisables. Ces matières sont généralement soumises en tout ou partie à un processus de réduction qui a pour but d'y transformer des formes métalliques dégradées (oxydes, sulfates, nitrates ...) en métaux natifs. Ces métaux subissent alors une opération d'affinage qui permet de fixer la composition finale du mélange qui sera réintroduit dans des chaînes de production. On peut noter les inconvénients suivants. La phase de séparation mécanique se traduit par des projections liquides ou la mise en suspension dans l'air de métaux lourds, ce qui constitue de graves nuisances pour les hommes et l'environnement. En outre, la réduction, qui ne peut se faire qu'à l'issue de la séparation mécanique, est un procédé qui nécessite une énergie importante et qui produit des volumes de fumées dont le traitement nécessite des investissements lourds et coûteux.

On connaît d'après le document GB-A-1.152.172 concerne un appareil pour récupérer des métaux ferreux ou non ferreus d'un objet. Cet appareil comporte une première chambre ou four dans laquelle les objets, des voitures par exemple, sont préchauffés. Les objets préchauffés passent ensuite dans un second four dans lequel chaque objet est soulevé pour être pris entre deux vérins rétractables et rotatifs grâce auxquels l'objet est mis en rotation dans une zone de chauffage comme pour une cuisson à la broche. L'objet est porté à des niveaux de température de plus en plus élevés suite à quoi divers métaux se mettent à fondre et sont récupérés successivement par un même chariot. Ce qui subsiste à la fin de la montée en température est compacté puis déposé sur ledit chariot pour évacuation. Une telle solution est très exigente du point de vue énergie puisqu'il faut élever l'objet à des températures très élevées (pouvant atteindre 1200°C dans le cas de voitures) au sein de fours de très grande taille incluant une zone basse d'arrivée, une zone haute de chauffage/rotation et une zone haute de compactage. D'autre part, cette solution implique un fonctionnement cyclique du four impliquant nécessairement une usure rapide des éléments mécaniques mobiles (chaînes, poulies, tambours, vérins). Enfin, cette solution est dangereuse : soulèvement en hauteur, utilisation de vérins à huile agissant sur des objets dépassant cycliquement 1000°C en température.

On connaît également d'après le document US-A-4.402.491 décrit un appareil pour la récupération du plomb et d'autres métaux, à partir de batteries mises au rebut. On tire profit de la chaleur de combustion des matériaux organiques volatiles des boîtiers de batterie pour réduire et fondre le plomb. On souffle de l'oxygène à la surface du bain de métal liquide pour oxyder sélectivement de l'antimoine. Dans la crasse surnageant sur le bain liquide se dissolvent les impuretés organiques et non métalliques contenues dans les batteries. Il y a une chambre d'introduction horizontale ou inclinée vers le bas, munie de brûleurs à gaz ou à huile, terminée par un siphon auprès duquel se fait le soufflage d'oxygène. A partir de cette première chambre s'étend une seconde chambre, s'étendant vers le haut en étant en communication directe avec la première chambre. Dans cette seconde chambre se mélangent les gaz de combustion avant de passer dans un purificateur. Une telle solution n'envisage que des batteries préalablement vidées de leur acide, ce qui nécessite donc un traitement préalable ; par ailleurs, cette solution implique des matériaux organiques pour apporter de la chaleur par leur combustion. On peut s'interroger sur la nature des phénomènes se produisant dans la première chambre puisque le plomb y serait réduit alors que l'on injecte de l'oxygène à proximité du bain recueillant le métal fondu. On peut s'attendre à ce que cet oxygène empêche la réduction en amont. En outre, une partie du plomb fondu s'oxyde avant de rejoindre le bain liquide. La qualité du métal récupéré est donc médiocre d'autant que la totalité de ce qui, dans les batteries, n'est pas vaporisé, se retrouve soit dans le bain liquide, soit dans la crasse qui surnage. D'autre part, l'existence de cette crasse oblige à prévoir des moyens et du temps pour éliminer périodiquement cette dernière.

L'invention a pour objet de pallier les inconvénients précités grâce à un traitement par thermolyse sous vide à température moyenne, aux environs de 600°C par exemple, tout en permettant :
- un contrôle continu des produits résiduels,
- un bon bilan énergétique global,
- un traitement automatisé en environnement clos, donc une manutention minimale et une nuisance très réduite pour le personnel,
- l'absence de tout traitement préalable des produits (s'agissant de batteries électriques il n'est par exemple pas nécessaire de les vider de leur acide),
- l'obtention avantageuse du produit intermédiaire (c'est-à-dire le liquide) avec une grande pureté, limitant l'importance et le coût des traitements finaux actuellement nécessaires dans les procédés existants (la pureté des produits intermédiaires est actuellement limitée en pratique à 93 % par le fait que la séparation mécanique introduit des impuretés intimement mélangées au produit intermédiaire).

L'invention propose ainsi, un procédé de traitement de produits solides contenant du métal à bas point de fusion, selon lequel on chauffe ces produits dans une première zone, on les thermolyse dans une deuxième zone sous une pression subatmosphérique tandis qu'on recueille à l'aide d'un siphon, dont la sortie communique avec une zone de pression supérieure à ladite pression subatmosphérique, du métal liquide s'écoulant des produits, puis on réduit ces produits dans une troisième zone, ces zones étant isolées les unes des autres et vis à vis de l'extérieur par des portes formant sas.

Selon d'autres caractéristiques de l'invention éventuellement combinées :
- on réduit les produits dans la troisième chambre tout en recueillant à l'aide de ce siphon du métal liquide résultant de la réduction,
- on fait circuler les produits solides dans les première et seconde chambres à l'intérieur de chariots, puis on répand les produits dans la troisième chambre en dehors des chariots et on évacue ces chariots avant de procéder à la réduction,
- on réduit les produits dans la troisième chambre tout en recueillant à l'aide d'un siphon du métal liquide résultant de la réduction,
- on introduit dans la première zone les produits solides en même temps que des déchets organiques comportant par exemple des pneus usagés éventuellement fragmentés, ces déchets se carbonisant dans la deuxième zone et participant à la réduction dans la troisième zone,
- on injecte dans la troisième zone un fluide organique,
- on dispose ce fluide organique dans un réservoir à la pression atmosphérique et on met en communication une zone de fond de ce réservoir avec la troisième zone au travers d'un régulateur de débit,
- on injecte dans la troisième chambre de l'air ou de l'oxygène à la pression atmosphérique au travers d'un régulateur de débit,
- ce régulateur de débit est monté sur une canalisation connectant la troisième chambre à l'extérieur,
- on maintient la zone de thermolyse sans oxygène libre,
- on maintient la zone de thermolyse à une température comprise entre 400°C et 750°C sous une pression au plus égale à 800 millibars, de préférence inférieure à 500 millibars environ,
- les produits sont introduits à un état brut, c'est-à-dire qu'ils peuvent n'avoir subi aucun traitement depuis leur mise au rebut,
- les produits sont des batteries électriques pouvant éventuellement contenir encore leur acide.

L'invention propose en outre, pour la mise en oeuvre de ce procédé une installation pour le traitement de produits solides contenant du métal à bas point de fusion, comportant un réacteur destiné à être traversé par les produits et intégrant successivement une chambre d'introduction, une chambre de thermolyse et une zone de réduction, et muni d'une porte d'entrée étanche isolant la chambre d'introduction vis à vis de l'extérieur, de portes étanches isolant la chambre de thermolyse vis à vis des chambres d'introduction et de réduction et d'une porte de sortie étanche isolant la chambre de réduction vis à vis de l'extérieur, ce réacteur comportant en outre des moyens de chauffage dans chacune des chambres, une source d'aspiration communiquant au moins avec la chambre de thermolyse pour la maintenir à une pression inférieure à la pression atmosphérique externe et un siphon communiquant, d'une part, au moins avec une zone de réception de métal liquide située dans la chambre de thermolyse et, d'autre part, avec l'extérieur.

Les zones précitées sont donc séparées en chambres isolées.

On appréciera que l'invention propose ainsi d'adapter pour récupérer sous forme liquide une fraction utile contenue dans des solides, une installation de thermolyse telle que décrite dans le document WO-92/16599 en principe destinée au traitement de produits solides, principalement des ordures, dont le rejet est préjudiciable pour l'environnement.

Or, il n'était pas évident a priori pour l'homme de métier qui avait à résoudre ce problème de récupération, qu'une installation de thermolyse du type précité, sous réserve d'adaptations appropriées, était susceptible de contribuer à résoudre ce problème. En effet, les points suivant devaient être résolus :
- comment extraire vers l'extérieur (en tout cas vers une zone de pression supérieure à la pression de la chambre de thermolyse) de la matière de la chambre de thermolyse en continu sans changer la pression dans cette chambre,
- comment introduire dans les mêmes conditions les éléments nécessaires à la réduction en chambre de réduction (matière solide ou liquide supplémentaire, oxygène).

Selon d'autres dispositions préférées de l'invention éventuellement combinées :
- ce siphon communique en outre avec une seconde zone de réception de métal liquide située dans la chambre de réduction,
- cette zone de réception de métal liquide est ménagée au fond de la chambre de réduction,
- cette seconde zone de réception de métal liquide est munie de moyens de chauffage,
- ces moyens de chauffage sont des brûleurs à gaz,
- ce réacteur comporte un siphon communiquant d'une part entre une zone de réception de métal liquide située dans la chambre de réduction et, d'autre part, l'extérieur,
- ladite zone de réception de métal liquide située dans la chambre de thermolyse est constituée par une partie du fond de cette chambre,
- ce siphon comporte à sa sortie un déversoir de coulée,
- ce siphon est à sa sortie à la pression atmosphérique,
- ce réacteur comporte des pistes longitudinales de roulement pour des chariots adaptés à circuler successivement dans la chambre d'introduction, dans la chambre de thermolyse puis dans la chambre de réduction,
- les chariots sont mûs par un ensemble à pignons et crémaillères,
- les chariots comportent en leur fond des perforations,
- il y a des moyens pour vider le contenu des chariots sur une zone de réception ménagée dans la chambre de réduction,
- la chambre de réduction est maintenue en dépression et est munie d'un système d'injection de fluide comportant un réservoir de fluide à la pression atmosphérique, une gaine mettant en communication une zone de fond de ce réservoir et la chambre de réduction, et un régulateur de débit monté sur cette gaine,
- les produits à traiter sont introduits dans le réacteur dans des chariots qui passent successivement de la chambre d'introduction et de mise en température à la chambre de thermolyse et de la chambre de thermolyse à la chambre de réduction à l'aide d'un système mécanique du genre pignons et crémaillère par exemple. Les chariots sont conçus pour que les résidus solides - matières minérales, matières métalliques - restent dans les chariots jusqu'à la chambre de réduction dans laquelle un système simple, basculement par exemple, permettra de les en retirer pour les placer dans un équipement de réduction, alors que les métaux rendus liquides à la température de travail pourront s'écouler librement par le fond des chariots muni de gouttières ou de perforations) pour être récupérés dans la jambe barométrique, les chariots sortant vides de la chambre de réduction,
- pour pouvoir réaliser la réduction, on pourra ajouter dans le chariot des matériaux organiques tels que bois ou pneu par exemple, qui, transformés en charbon dans la zone de thermolyse, seront utilisés comme combustible dans la zone de réduction,
- l'utilisation des chambres de thermolyse et de réduction peut être simultanée ou séquentielle suivant le choix du concepteur,
- la chambre d'introduction et la chambre de thermolyse ainsi que l'équipement de réduction sont chauffées par des thermoréacteurs tels que des brûleurs alimentés d'une part, en oxygène pur ou en air et, d'autre part, en gaz carburant (gaz de pyrolyse provenant de la décomposition thermolytique, ou bien gaz provenant d'un réseau local ou national, ou bien mélange de ces deux sources) ainsi que par des résistances électriques placées à l'intérieur des chambres ou collées aux parois à l'extérieur des chambres,
- le gaz carbonique et la vapeur d'eau générés dans la combustion du mélange ci-dessus participent à la mise en température par convection et rayonnement des produits à traiter,
- les gaz de pyrolyse formés dans la décomposition thermolytique ainsi que les gaz résiduels de combustion sont refroidis et épurés à la sortie du réacteur dans un ensemble extracteur-laveur de gaz où s'effectuent la condensation de l'eau, la séparation des gaz incondensables et des hydrocarbures lourds condensés,
- l'extracteur de gaz peut se trouver avant ou après le laveur suivant le choix du concepteur,
- les composés halogénés et de soufre sont éliminés dans le laveur par dissolution dans l'eau de lavage,
- le laveur contient par exemple une solution aqueuse de carbonate de potassium, où est éliminé le gaz carbonique,
- les hydrocarbures lourds et le charbon sont récupérés par décantation de l'eau de lavage à la sortie du laveur dans un décanteur,
- le flux gazeux, sortant du laveur ou alimentant le laveur suivant la solution choisie par le concepteur, est aspiré par un équipement de vide (pompe à anneau liquide, éjecteur ou compresseur par exemple),
- les gaz de pyrolyse épurés des composés halogénés, soufrés et du gaz carbonique sont utilisés dans le chauffage des chambres de l'installation et l'excédent est mis en réserve pour utilisation ultérieure,
- le contrôle de la cinétique de la transformation thermolytique dans la chambre de thermolyse est obtenu par la régulation du chauffage électrique et de la combustion grâce à la mise en oeuvre de systèmes classiques de mesure des températures et de régulation des débits de gaz, de comburant et de courant électrique.

Des objets, caractéristiques et avantages de l'invention ressortent de la description qui suit, donnée à titre d'exemple non limitatif, en regard des dessins annexés sur lesquels :
- la figure 1 est une vue de principe en plan d'une installation selon l'invention,
- la figure 2 est une vue plus détaillée en coupe transversale de la chambre de thermolyse, selon la ligne II-II de la figure 4,
- la figure 3 est une vue schématique en coupe transversale de la chambre de réduction, munie d'un système d'injection de fluide, et
- la figure 4 en est une vue en coupe longitudinale de l'installation de traitement dans l'application de l'invention au problème spécifique du recyclage des batteries au plomb.

On pourra noter que cette installation, donnée à titre d'exemple, pourra, sans modification majeure, être utilisée dans le cadre du traitement des piles - Type cadmium/nickel ou autre - ou dans le traitement de produits zingués.

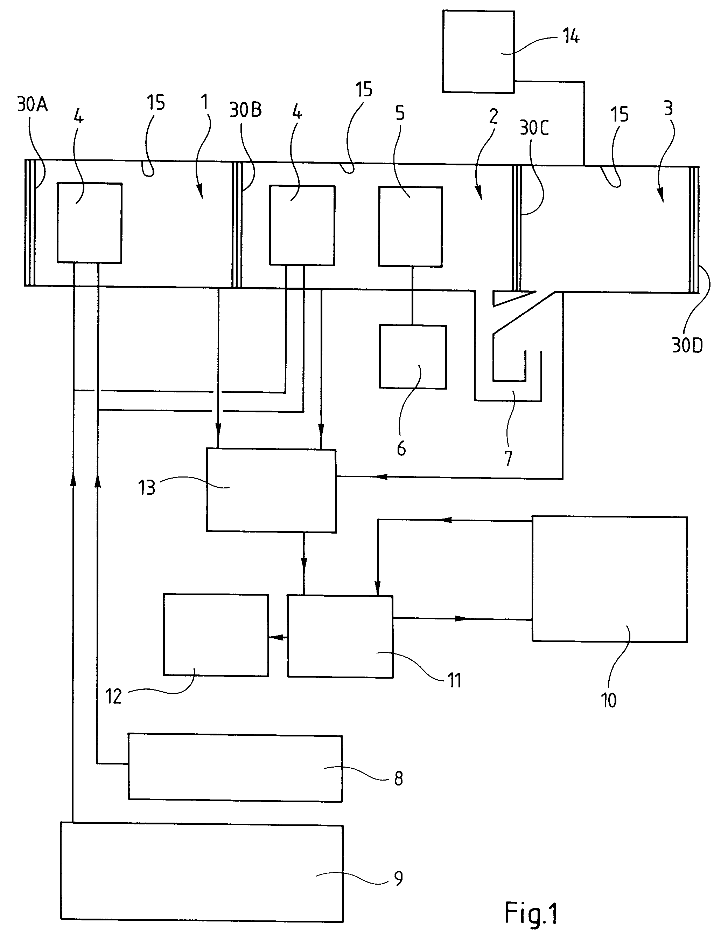

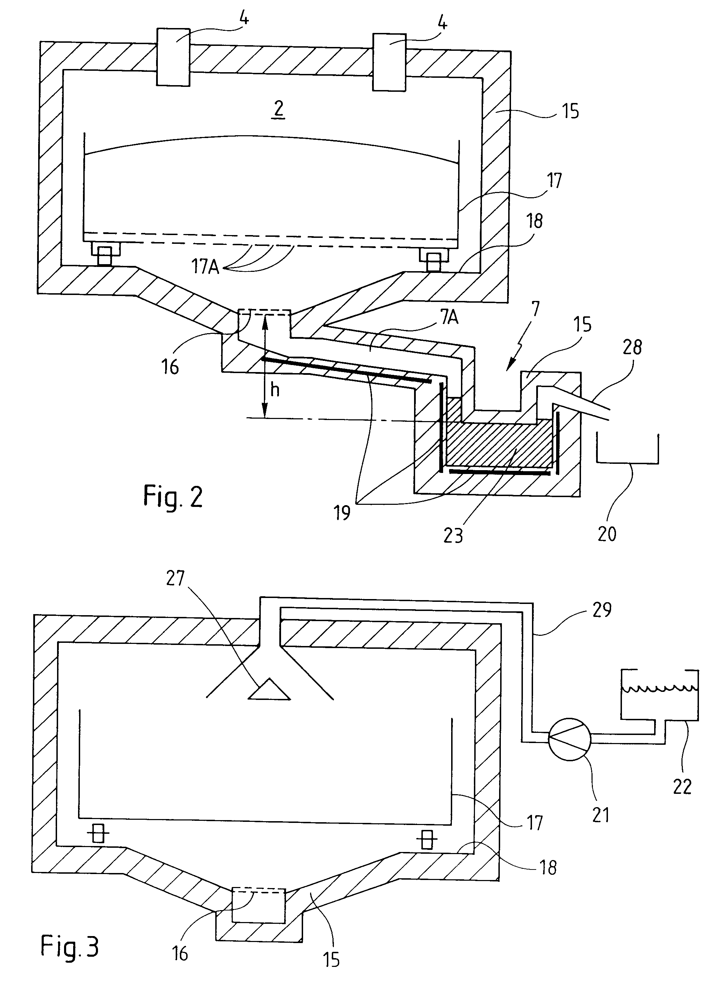

La figure 1 montre le schéma de principe de l'installation et les figures 2 à 4 en présentent certaines formes préférées de construction.

L'installation de la figure 1 comporte un réacteur intégrant en un seul appareil une chambre 1 d'introduction des produits à traiter (par exemple des batteries pouvant encore contenir leur acide) et dans laquelle ces produits subissent un préchauffage, une chambre de thermolyse 2 dans laquelle les produits, partiellement ou totalement déshydratés dans la première chambre, sont portés à la température de décomposition thermique, par exemple aux environs de 600°C (typiquement entre 400°C et 750°C) et une chambre de réduction 3 où les résidus solides du traitement thermique sont transformés pour partie en métal natif liquide.

La transformation thermolytique dans le réacteur est avantageusement effectuée en absence totale d'oxygène libre à température moyenne de 600°C et sous une pression inférieure à la pression atmosphérique externe.

Le fonctionnement à cette température n'induit pas d'usure marquée du système dont la durée de vie est ainsi prolongée et le coût de fonctionnement réduit.

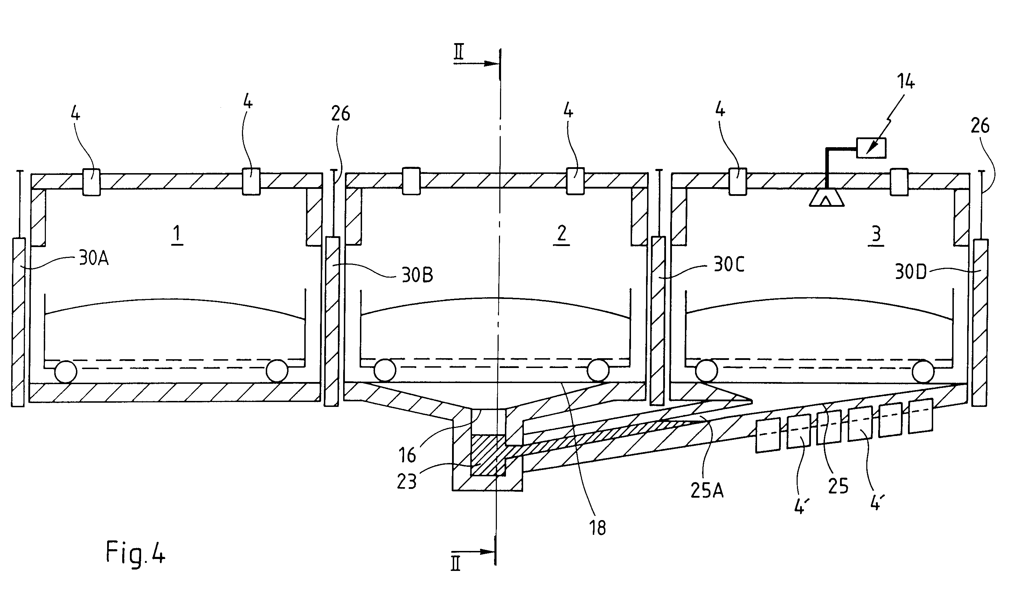

Les chambres sont isolées les unes des autres de façon sensiblement étanche, par des portes guillotine 30B et 30C actionnées par des vérins 26 (voir la figure 4) ; la porte 30B entre les chambres 1 et 2 et la porte 30C entre les chambres 2 et 3 sont mobiles transversalement (ici verticalement) dans des logements étanches, la traversée des vérins de levage se faisant par presse-étoupe. En outre, des portes étanches 30A et 30D sont prévues respectivement à l'entrée de la chambre 1 et à la sortie de la chambre 3 grâce à quoi les chambres d'introduction 1 et de réduction 3 sont, à volonté, isolées vis à vis de l'extérieur et/ou de la chambre de thermolyse 2 ; ces portes 30A et 30D peuvent être mobiles verticalement ou horizontalement ou encore autour d'une articulation selon les dimensions du réacteur, l'espace disponible et le libre choix du concepteur.

Les produits circulent à l'intérieur des chariots 17 avantageusement entraînés par un système à pignons et créamillère (non représenté).

On appréciera que l'étanchéité assurée par les portes d'entrée et de sortie se fait entre l'extérieur et la zone 1 à température modérée, très inférieure à celle de la chambre 2, et entre l'extérieur et la zone 3 à température plus élevée, sensiblement supérieure à celle de la chambre 2 (voir ci-dessous). L'introduction des produits et l'extraction des produits à traiter sont ainsi réalisés, pour éviter l'entrée d'air dans la chambre 2, par des sas qui isolent alternativement selon les besoins la chambre d'introduction de la chambre de thermolyse quand on amène grâce aux chariots les produits dans la chambre d'introduction, et la chambre de thermolyse de la chambre de refroidissement quand on extrait les chariot de cette troisième chambre.

Les parois 15 des chambres 1 et 2 voire 3 du réacteur sont calorifugées pour limiter les déperditions calorifiques. Les chambres 1, 2 et 3 sont munies de moyens de chauffage de tous types connus appropriés, par exemple des brûleurs 4 ou des résistances électriques 5. La température de la chambre 2 est par exemple maintenue aux alentours de 600°C tandis que celle de la chambre 1, inférieure, est maintenue en dessous de 200°C, par exemple à 150°C, et celle de la chambre 3 est maintenue en dessous de 1200°C par exemple 1000°C.

Des brûleurs à gaz 4 sont à la figure 4 représentés en plafond des chambres 1 à 3, mais peuvent également être mis sur les parois latérales. Ces brûleurs sont placés dans des logements étanches vis à vis de l'extérieur. Ils sont alimentés en air ou oxygène à partir d'un réservoir 8 et en gaz carburant (gaz naturel par exemple) à partir d'un réservoir 9.

Les résistances électriques 5 sont alimentées à partir d'un transformateur 6 (seuls des brûleurs sont représentés à la figure 4) ; ces résistances sont de préférence disposées à l'intérieur du réacteur, collées aux parois 15 (mais peuvent être mises à l'extérieur), l'alimentation électrique étant faite en utilisant des traversées étanches.

La chambre 2 est maintenue en dépression, par rapport à l'extérieur, typiquement à une pression inférieure ou égale à 800 mbars, voire 500 mbars. De préférence, la même pression règne dans les chambres 1, 2 et 3.

Les produits de décomposition (gaz incondensables, hydrocarbures lourds) générés dans les chambres 1 à 3 sont contrôlés en continu à la sortie du système et sont éventuellement recyclés pour traitement complémentaire.

La dépression désirée est maintenue dans les chambres 1, 2 et 3 par un système de mise en vide 13 (une pompe à anneau liquide par exemple) qui y prélève du mélange gazeux et injecte ce dernier dans un laveur de gaz 11 débouchant dans un bac de décantation 10 dans lequel les eaux de lavage sont traitées par les méthodes classiques de la chimie des eaux, puis recyclées dans le laveur 11. La fraction incondensable des gaz arrivant dans le laveur 11 est traitée par un dispositif classique de traitement de fumée 12. On appréciera que l'acide contenu dans les batteries est vaporisé à la température de travail et qu'on le retrouve totalement après refroidissement des gaz dans le laveur 11 dans le bassin de décantation où il est très aisé de le neutraliser.

Le fond de la chambre de thermolyse 2 ainsi que de préférence celui de la chambre de réduction 3 communiquent avec l'extérieur par un siphon ou "jambe barométrique" 7 qui permet la récupération et l'évacuation des phases liquides sans pour autant nuite à la dépression maintenue dans les chambres 2 et 3.

La figure 2 montre une vue en coupe transversale de la chambre de thermolyse. Le chariot 17 contenant les produits solides à traiter roule sur des plans ou pistes de roulement 18 s'étendant longitudinalement au travers des chambres et qui se situent de part et d'autre d'une zone de fond qui est en "pointe de diamant" (c'est-à-dire en forme de pyramide renversée). Le bas de cette pointe est couvert d'une grille 16 qui empêche les éléments solides, qui pourraient tomber du chariot, de pénétrer dans la goulotte d'alimentation 7A de la jambe barométrique 7. Un système de raclage (non représenté) permet de nettoyer périodiquement la grille.

A la température de travail (les produits solides dans le chariot sont à environ 500°C), le plomb des produits solides fond et s'écoule hors du chariot, par exemple grâce à des perforations 17A, puis coule au travers de cette grille dans la goulotte 7A jusqu'au fond en U du siphon, constituant un réservoir 23. La hauteur de la jambe, c'est-à-dire la dénivellation h entre la paroi supérieure du réservoir 23 et le plan horizontal défini par la grille 16, qui ne dépasse pas 2 mètres dans cette application, permet de garantir, lors de la mise en dépression de l'installation aux environs de 500 millibars, que la remontée de plomb résultante (il faut noter que la sortie du siphon est à la pression atmosphérique) laisse le niveau supérieur de la masse de plomb dans la jambe sous le niveau de la grille 16.

Lors de l'écoulement du plomb dans la jambe ou goulotte 7A, le niveau monte dans le canal de sortie du siphon, ici conformé en déversoir 28, pour équilibrer les pressions et le plomb peut s'écouler dans une lingotière 20 ici disposée sous le déversoir 28.

Le plomb dans la jambe barométrique 7 est maintenu liquide par chauffage à l'aide de résistances électriques 19 disposées le long de la goulotte 7A et auprès du réservoir 23 et qui sont alimentées par le transformateur 6.

La figure 3 montre une vue en coupe de la chambre de réduction 3 et d'un système schématisé en 14 à la figure 1, pour l'injection de produits secondaires nécessaires à la transformation.

Plus généralement, cette figure 3 montre un système pour introduire à volonté un liquide lourd (de l'huile par exemple) ou un fluide pulvérulent dans un four travaillant en dépression sans changer les paramètres de fonctionnement du système (pression, température).

Dans le cadre du traitement des batteries au plomb, ce système permet de tirer profit d'huiles souillées que l'on veut éliminer dans le cadre d'un traitement global des résidus automobiles.

Ce système comporte un réservoir 22, ici à la pression atmosphérique, qui alimente une pompe doseuse 21 qui autorise l'entrée du liquide dans une gaine 29 qui est terminée par un diffuseur 27 débouchant dans le four ; cette gaine est en dépression puisqu'elle communique avec le four. La pompe doseuse est munie d'un automatisme (non représenté) relié au niveau résiduel dans le réservoir pour éviter qu'il ne se vide complètement et que de l'air puisse rentrer dans le four. La pompe est entraînée par le fluide qui la traverse et agit en fait comme un régulateur de débit. On appréciera que cette introduction de fluide utilise la force motrice créée par la dépression dans la chambre et qu'ainsi elle est très peu consommatrice d'énergie.

Dans une variante équivalente (non représentée), la pompe doseuse 21 est remplacée par une vanne de régulation, ce qui permet de créer une entrée d'air contrôlée dans la chambre 3, par contrôle du débit d'air aspiré prélevé dans l'atmosphère, cet air permettant la réduction des produits déposés sur le fond de la chambre, le fluide injecté étant non plus liquide mais gazeux.

La figure 4 montre un coupe longitudinale de l'ensemble de l'installation. On y retrouve la plupart des éléments précités.

On y observe en outre que le fond de la chambre 3 est incliné avec une pente permettant un écoulement de tout produit liquide vers le réservoir 23 de la jambe barométrique En variante non représentée, il peut s'agir d'un siphon autonome, distinct du siphon 7 (pour le cas par exemple où les liquides recueillis dans les chambres 2 et 3 ne seraient pas de même qualité).

Des brûleurs additionnels 4' sont prévus auprès de ce fond.

En fonctionnement, le chariot pénétrant dans la chambre 3 est vidé de son contenu (par exemple par basculement latéral) qui se répand ainsi sur le fond 25. Le chariot est évacué puis les brûleurs 4' sont activés, apportant ainsi l'énergie nécessaire à la réduction finale, et le plomb ainsi formé coule dans le réservoir 23. Un système de raclage, non représenté, en fin de traitement, élimine les éléments solides résiduels par la porte 26. Le fond 25 est avantageusement muni d'une grille de protection (non représentée) évitant le glissement de résidus solides dans la goulotte 25A.

Les avantages découlant de cette description sont : l'absence totale de manutention des produits traités (après introduction), l'optimisation de l'.énergie apportée à la transformation du plomb qui ne subit que deux changements de phase (solide, liquide, solide en lingot) et le travail en enceinte close qui élimine toutes les projections (acide) et émanations (poussière de plomb) que l'on peut trouver dans les procédés habituels.

Il va de soi que la description qui précède n'a été proposée qu'à titre d'exemple non limitatif et que de nombreuses variantes peuvent être proposées par l'homme de l'art sans sortir du cadre de l'invention. C'est ainsi notamment que les chambres 2 et 3 peuvent être à des pressions différentes, auquel cas, dans l'exemple de la figure 1, la séparation en pression des deux chambres peut être maintenue par pénétration du métal fondu (à des niveaux différents) dans chacune des branches d'entrée du siphon (lorsque celui-ci est unique).

## Revendications

1. Procédé de traitement de produits solides contenant du métal à bas point de fusion, selon lequel on chauffe (1) ces produits dans une première zone, on les thermolyse (2) dans une deuxième zone sous une pression subatmosphérique tandis qu'on recueille à l'aide d'un siphon (7), communiquant avec l'extérieur, du métal liquide s'écoulant des produits, puis on réduit ces produits dans une troisième zone (3), ces zones étant isolées les unes des autres et vis à vis de l'extérieur par des portes formant sas (30A - 30D).

2. Procédé selon la revendication 1, caractérisé en ce qu'on réduit les produits dans la troisième chambre tout en recueillant à l'aide de ce siphon du métal liquide résultant de la réduction.

3. Procédé selon la revendication 1 ou la revendication 2, caractérisé en ce qu'on fait circuler les produits solides dans les première et seconde chambres à l'intérieur de chariots, puis on répand les produits dans la troisième chambre en dehors des chariots et on évacue ces chariots avant de procéder à la réduction.

4. Procédé selon la revendication 1, caractérisé en ce qu'on réduit les produits dans la troisième chambre tout en recueillant à l'aide d'un siphon du métal liquide résultant de la réduction.

5. Procédé selon l'une quelconque des revendications 1 à 4, caractérisé en ce qu'on introduit dans la première zone les produits solides en même temps que des déchets organiques, ces déchets se carbonisant dans la deuxième zone et participant à la réduction dans la troisième zone.

6. Procédé selon la revendication 5, caractérisé en ce que les déchets organiques comportent des pneus usagés.

7. Procédé selon l'une quelconque des revendications 1 à 6, caractérisé en ce qu'on injecte dans la troisième zone un fluide organique.

8. Procédé selon la revendication 7, caractérisé en ce qu'on dispose ce fluide organique dans un réservoir (22) à la pression atmosphérique et on met en communication une zone de fond de ce réservoir avec la troisième zone au travers d'un régulateur de débit (21).

9. Procédé selon l'une quelconque des revendications 1 à 6, caractérisé en ce qu'on injecte dans la troisième chambre de l'air ou de l'oxygène à la pression atmosphérique au travers d'un régulateur de débit.

10. Procédé selon la revendication 9, caractérisé en ce que ce régulateur de débit est monté sur une canalisation connectant la troisième chambre à l'extérieur.

11. Procédé selon l'une quelconque des revendications 1 à 10, caractérisé en ce qu'on maintient la zone de thermolyse sans oxygène libre.

12. Procédé selon l'une quelconque des revendications 1 à 11, caractérisé en ce qu'on maintient la zone de thermolyse à une température comprise entre 400°C et 750°C sous une pression au plus égale à 800 millibars.

13. Procédé selon la revendication 12, caractérisé en ce que la pression est au plus égale à 500 millibars environ.

14. Procédé selon l'une quelconque des revendications 1 à 13, caractérisé en ce qu'on introduit les produits solides dans la première zone dans un état brut.

15. Procédé selon l'une quelconque des revendications 1 à 14, caractérisé en ce que les produits solides comportent des batteries.

16. Procédé selon la revendication 15, caractérisé en ce que les batteries contiennent de l'acide.

17. Installation pour le traitement de produits solides contenant du métal à bas point de fusion, comportant un réacteur destiné à être traversé par les produits et intégrant successivement une chambre d'introduction (1), une chambre de thermolyse (2) et une zone de réduction (3), et muni d'une porte d'entrée étanche (30A) isolant la chambre d'introduction (1) vis à vis de l'extérieur, de portes étanches (30B, 30C) isolant la chambre de thermolyse (2) vis à vis des chambres d'introduction (1) et de réduction (3) et d'une porte de sortie étanche (30D) isolant la chambre de réduction (3) vis à vis de l'extérieur, ce réacteur comportant en outre des moyens de chauffage dans chacune des chambres, une source d'aspiration (13) communiquant au moins avec la chambre de thermolyse (2) pour la maintenir à une pression inférieure à la pression atmosphérique externe et un siphon (7) communiquant, d'une part, au moins avec une zone de réception de métal liquide située dans la chambre de thermolyse et, d'autre part, avec l'extérieur.

18. Installation selon la revendication 17, caractérisée en ce que ce siphon (7) communique en outre avec une seconde zone (25) de réception de métal liquide située dans la chambre de réduction (3).

19. Installation selon la revendication 18, caractérisé en ce que cette zone (25) de réception de métal liquide est ménagée au fond de la chambre de réduction.

20. Installation selon la revendication 18 ou la revendication 19, caractérisée en ce que cette seconde zone de réception de métal liquide est munie de moyens de chauffage (4').

21. Installation selon la revendication 20, caractérisée en ce que ces moyens de chauffage sont des brûleurs à gaz.

22. Installation selon la revendication 17, caractérisée en ce que ce réacteur comporte un siphon communiquant d'une part entre une zone de réception de métal liquide située dans la chambre de réduction (3) et, d'autre part, l'extérieur.

23. Installation selon l'une quelconque des revendications 17 à 22, caractérisée en ce que ladite zone de réception de métal liquide située dans la chambre de thermolyse est constituée par une partie du fond de cette chambre.

24. Installation selon l'une quelconque des revendications 17 à 23, caractérisée en ce que ce siphon comporte à sa sortie un déversoir de coulée (28).

25. Installation selon l'une quelconque des revendications 17 à 24, caractérisé en ce que ce siphon est à sa sortie à la pression atmosphérique.

26. Installation selon l'une quelconque des revendications 17 à 25, caractérisé en ce que ce réacteur comporte des pistes longitudinales de roulement pour des chariots adaptés à circuler successivement dans la chambre d'introduction (1), dans la chambre de thermolyse (2) puis dans la chambre de réduction (3).

27. Installation selon la revendication 26, caractérisée en ce que les chariots sont mûs par un ensemble à pignons et crémaillères.

28. Installation selon la revendication 26 ou la revendication 27, caractérisée en ce que les chariots comportent en leur fond des perforations (17A).

29. Installation selon l'une quelconque des revendications 26 à 28, caractérisée en ce qu'il y a des moyens pour vider le contenu des chariots sur une zone de réception (25) ménagée dans la chambre de réduction.

30. Installation selon l'une quelconque des revendications 17 à 29, caractérisée en ce que la chambre de réduction est maintenue en dépression et est munie d'un système d'injection de fluide comportant un réservoir de fluide (22) à la pression atmosphérique, une gaine (29) mettant en communication une zone de fond de ce réservoir et la chambre de réduction, et un régulateur de débit (21) monté sur cette gaine.
